# FASCICULE DE BREVET EUROPEEN

(11) **EP 1 013 490 B1**
(45) Date de publication et mention de la délivrance du brevet: **11.01.2006**
(21) Numéro de dépôt: 99125617.3
(22) Date de dépôt: 22.12.1999
(51) Int. Cl.: B60H 1/00

(54) **Dispositif de chauffage et/ou climatisation de véhicule automobile à mixage d'air amélioré**
Fahrzeugklimaanlage mit verbesserter Luftmischung
Vehicle heating and/or air conditioning with improved air mixing

(30) Priorité: 22.12.1998 FR 9816249
(43) Date de publication de la demande: 28.06.2000
(73) Titulaire: VALEO SYSTEMES THERMIQUES, 78320 Le Mesnil Saint-Denis (FR)
(72) Inventeur: Loup, Didier, 78310 Maurepas (FR); Auvity, Michel, 78140 Velizy (FR); Queinnec, Jean-Yves, 78990 Elancourt (FR); Vincent, Philippe, 28230 Epernon (FR)

(56) Documents cités:
- EP-A- 0 846 580
- DE-A- 4 023 306
- DE-A- 19 749 104
- DE-A- 19 750 381
- FR-A- 2 703 305
- FR-A- 2 778 152

## Description

L'invention se rapporte aux dispositifs de chauffage et/ou climatisation des véhicules automobiles.

Elle concerne plus particulièrement un dispositif comprenant un conduit d'air froid, un conduit d'air chaud logeant un radiateur de chauffage, une chambre de mixage communiquant avec des sorties d'air respectives desdits conduits, et des moyens de mixage propres à contrôler lesdites sorties d'air en proportion choisie pour régler la température de l'air dans la chambre de mixage. Un tel dispositif est décrit par exemple dans le document DE 197 50381.

Des dispositifs de ce type permettent de mélanger, dans une proportion réglée, un flux d'air froid provenant du conduit d'air froid et un flux d'air chaud provenant du conduit d'air chaud pour obtenir, dans la chambre de mixage, un flux d'air à température ajustée.

Ce flux d'air est ensuite réparti dans l'habitacle du véhicule par des moyens de distribution appropriés, comprenant des conduits aboutissant à différentes buses disposées en des endroits choisis de l'habitacle.

Généralement, les moyens de mixage comprennent un volet de mixage, du type papillon, monté pivotant autour d'un axe situé à proximité du radiateur de chauffage et présentant deux ailes propres à contrôler respectivement les sorties des conduits d'air froid et d'air chaud.

Un tel volet peut se débattre de l'une à l'autre de deux positions extrêmes comprenant une position "chaud" (en laquelle la sortie du conduit d'air froid est fermée et la sortie du conduit d'air chaud est ouverte) et une position "froid" (en laquelle la sortie du conduit d'air chaud est fermée et la sortie du conduit d'air froid est ouverte).

Un tel dispositif, avec volet de mixage du type papillon, a notamment pour inconvénient que, lorsque le volet passe de la position "chaud" à la position "froid", de l'air froid pénètre dans la chambre de mixage à partir d'une région de la sortie du conduit d'air froid qui se trouve près d'un bord libre du volet papillon. Cette région particulière se trouve précisément à l'opposé de la région de la sortie du conduit d'air chaud, par laquelle le flux d'air chaud pénètre dans la chambre de mixage, c'est-à-dire près d'un bord opposé du volet papillon. Il en résulte que le flux d'air et le flux d'air chaud ont tendance à se stratifier, si bien que leur mélange ne peut se faire qu' à une distance éloignée du radiateur de chauffage, ce qui oblige à augmenter le volume de la chambre de mixage, et donc du dispositif.

L'invention a essentiellement pour but de surmonter un tel inconvénient.

Elle vise donc à favoriser la rencontre et le mélange efficace du flux d'air froid et du flux d'air chaud dans une zone plus proche du radiateur de chauffage, de manière à dégager de la place, en aval du radiateur de chauffage, pour la distribution de l'air.

L'invention propose à cet effet, un dispositif de chauffage et/ou climatisation de véhicule automobile tel que défini dans la revendication 1.

Ainsi, lors de l'ouverture progressive du volet, pour passer de la position "chaud" à la position "froid", celui-ci dégage progressivement un passage d'air froid dans une zone proche du radiateur de chauffage. Il en résulte que le flux d'air froid et le flux d'air chaud peuvent être mélangés de manière optimale et que, de ce fait, la taille de la chambre de mixage peut être diminuée par rapport aux dispositifs connus.

Dans une première forme générale de réalisation de l'invention, les moyens de mixage comprennent un volet principal monté pivotant autour d'un axe et comportant une paroi qui, dans la position "chaud" ferme la sortie du conduit d'air froid et, dans la position "froid", est escamotée dans une position éloignée du radiateur, ainsi que des moyens auxiliaires, coordonnés avec le volet principal, pour empêcher le passage d'air chaud lorsque le volet principal est en position "froid".

Cette première forme générale peut s'appliquer au cas où le radiateur de chauffage est propre à être parcouru par un liquide chaud sous le contrôle d'un robinet de réglage de débit. En ce cas, les moyens auxiliaires comprennent une commande propre à actionner ce robinet de manière qu'il se trouve dans une position fermée, interdisant la circulation du liquide chaud, lorsque le volet principal est en position "froid".

Cette première forme générale peut s'appliquer aussi à un radiateur de chauffage propre à être parcouru en permanence par un liquide chaud. En ce cas, les moyens auxiliaires comprennent au moins un volet auxiliaire propre à fermer le conduit d'air chaud lorsque le volet principal est en position froid.

Ce volet auxiliaire peut être logé dans le conduit d'air chaud en amont du radiateur de chauffage.

A titre d'exemple, on peut alors prévoir que le volet principal est un volet tambour et que le volet auxiliaire est un volet papillon.

Généralement, on préfère que le volet auxiliaire soit propre à contrôler la sortie du conduit d'air chaud, c'est-à-dire qu'il se trouve situé en aval du radiateur de chauffage.

En pareil cas, les moyens de mixage comprennent essentiellement un volet principal et un volet auxiliaire.

Le volet principal et le volet auxiliaire peuvent être choisis chacun parmi différents types de volets.

Dans une forme de réalisation de l'invention, le volet principal est un volet tambour et le volet auxiliaire est un volet tambour.

Différentes variantes de réalisation sont alors envisageables.

Dans une variante, le volet auxiliaire est monté pivotant autour d'un axe éloigné de l'axe de rotation du volet principal.

Dans une autre variante, le volet principal et le volet auxiliaire ont des axes de rotation respectifs qui sont coaxiaux ou sensiblement coaxiaux.

On peut alors prévoir que le volet principal et le volet auxiliaire soient propres à tourner avec des sens de rotation opposés entre la position "froid" où les deux volets sont éloignés, le volet principal ouvrant la sortie du conduit d'air froid et le volet auxiliaire fermant la sortie du conduit d'air chaud, et la position "chaud" où les deux volets sont rapprochés et ferment conjointement la sortie du conduit d'air froid.

Dans une autre variante, le volet principal et le volet auxiliaire sont propres à tourner dans le même sens de rotation entre la position "froid", où le volet principal ouvre la sortie du conduit d'air froid et le volet auxiliaire ferme la sortie du conduit d'air chaud, et la position "chaud" où le volet principal ferme la sortie du conduit d'air froid et le volet auxiliaire ouvre la sortie du conduit d'air chaud.

Dans cette dernière variante, le volet principal et le volet auxiliaire peuvent former un ensemble monobloc et être montés à rotation autour d'un axe unique.

Ils peuvent aussi être distincts et montés à rotation autour d'axes parallèles adjacents.

Dans une autre forme de réalisation de l'invention, le volet principal est un volet tambour et le volet auxiliaire est un volet drapeau.

Il peut être envisagé, par exemple, que le volet principal et le volet auxiliaire forment un ensemble monobloc monté à rotation autour d'un axe unique.

Il est possible aussi que ces volets soient montés à rotation autour d'axes respectifs parallèles.

Dans une autre forme de réalisation de l'invention, le volet principal est un volet tambour et le volet auxiliaire est un volet papillon. En pareil cas, le volet auxiliaire comporte avantageusement deux ailes non coplanaires.

De préférence en ce cas, le volet principal et le volet auxiliaire sont montés à rotation en sens opposés autour d'axes respectifs parallèles.

Dans la description qui suit, faite à titre d'exemple, on se réfère aux dessins annexés, sur lesquels :
- la figure 1 est une vue en coupe d'un dispositif, représenté en position "chaud" ;
- la figure 2 est une vue analogue à la figure 1 dans laquelle le dispositif est en position de mixage ;
- la figure 3 est une vue en coupe d'un dispositif selon une forme de réalisation de l'invention ;
- la figure 4 est une vue en coupe d'un dispositif selon une autre forme de réalisation de l'invention ;
- la figure 5 est une vue en coupe d'un dispositif selon une autre forme de réalisation de l'invention, comprenant deux volets représentés en position "froid" ;
- la figure 6 est une vue analogue à la figure 5 dans laquelle les volets sont en position "chaud" ;
- la figure 7 est une vue analogue à la figure 5 dans laquelle les volets sont en position de mixage ;
- la figure 8 est une vue en coupe d'un dispositif, représenté en position "froid" ;
- la figure 9 est une vue analogue à la figure 8, dans laquelle le dispositif est représenté en position de mixage;
- la figure 10 est une vue en coupe d'un dispositif selon une variante de la figure 8, représenté en position "froid";
- la figure 11 est une vue analogue à la figure 10, le dispositif étant représenté en position de mixage ;
- la figure 12 est une vue en coupe d'un dispositif selon une autre forme de réalisation de l'invention, représenté en position "froid" ;
- la figure 13 est une vue analogue à la figure 12, dans laquelle le dispositif est représenté en position de mixage;
- la figure 14 est une vue en coupe d'un dispositif, représenté en position "chaud" ;
- la figure 15 est une vue en coupe analogue à la figure 12 dans une variante de réalisation ;
- la figure 16 est une vue analogue à la figure 15, dans laquelle le dispositif est en position de mixage ;
- la figure 17 est une vue analogue à la figure 14 dans une variante de réalisation ;
- la figure 18 est une vue en coupe d'un dispositif selon une autre forme de réalisation de l'invention, représenté en position "froid" ;
- la figure 19 est une vue analogue à la figure 18, dans laquelle le dispositif est en position de mixage ;
- la figure 20 est une vue en coupe d'un dispositif, représenté en position "chaud";
- la figure 21 est une vue en coupe d'un dispositif selon une autre forme de réalisation, représenté en position "froid";
- la figure 22 est une vue analogue à la figure 21, dans laquelle le dispositif est représenté en position de mixage;
- la figure 23 est une vue en coupe d'un dispositif, représenté en position "chaud" ;
- la figure 24 est une vue en coupe d'un dispositif, représenté en position "froid" ;
- la figure 25 est une vue analogue à la figure 24, dans laquelle le dispositif est en position de mixage ;
- la figure 26 est une vue en coupe d'un dispositif ,dans laquelle le dispositif est en position "froid" ;
- la figure 27 est une vue analogue à la figure 26, le dispositif étant représenté en position de mixage ;

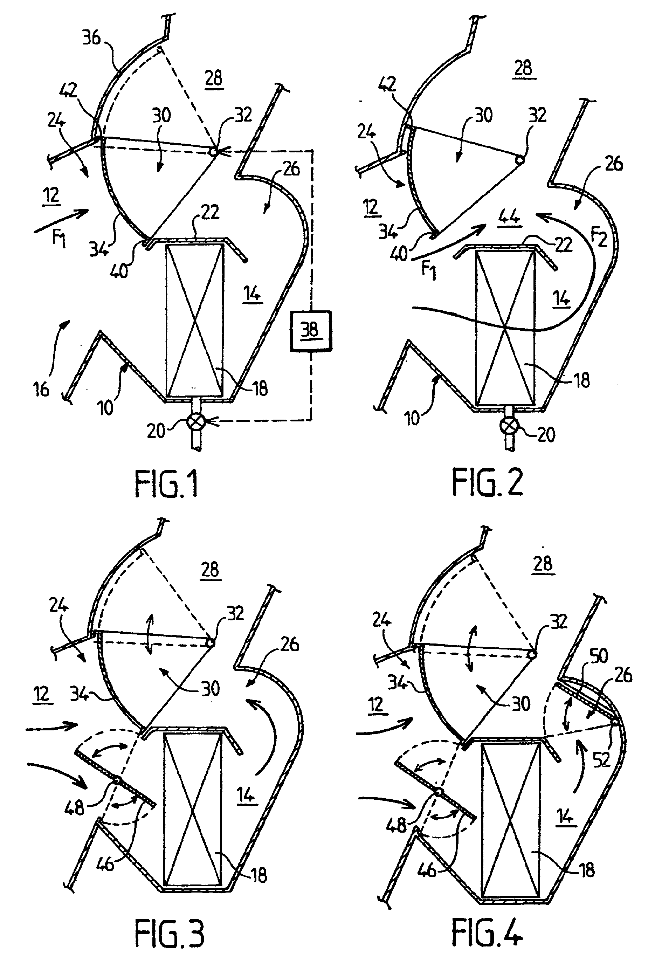

Les différents dispositifs décrits dans les figures 1, 2, 8 à 11, 14, 17, 20 ainsi que 23 à 27 ne font pas partis de l'invention tel que revendiqué et sont présents ici uniquement à titre d'information.

On se réfère d'abord à la figure 1 qui représente un dispositif de chauffage et/ou climatisation de l'habitacle d'un véhicule automobile. Ce dispositif comprend un boîtier 10 délimitant un conduit d'air froid 12 et un conduit d'air chaud 14 tous deux alimentés en air froid (flèche F1) à partir d'une entrée commune 16.

Le conduit d'air chaud 14, encore appelé conduit de réchauffage d'air, loge un radiateur de chauffage 18 propre à être parcouru par un liquide chaud, habituellement le liquide servant au refroidissement du moteur du véhicule. La circulation de ce liquide dans le radiateur 18 s'effectue sous le contrôle d'un robinet de réglage de débit 20. Ainsi, lorsque ce robinet est fermé, le flux d'air qui traverse le radiateur de chauffage n'est pas chauffé et, inversement, lorsque ce robinet est ouvert, le flux d'air est réchauffé.

Dans l'exemple, le radiateur 18 est placé dans une position sensiblement verticale en dessous d'une cloison 22 qui contribue à délimiter, à l'intérieur du boîtier 10, deux sorties d'air 24 et 26 correspondant respectivement au conduit d'air froid 12 et au conduit d'air chaud 14. Ces deux sorties débouchent sur une chambre de mixage 28 qui est en communication avec différentes buses de sortie d'air (non représentées) réparties dans l'habitacle du véhicule.

Dans le boîtier 28 est logé un volet de mixage 30, dans l'exemple un volet tambour, monté pivotant autour d'un axe 32 et possédant une paroi d'obturation 34 de forme cylindrique circulaire centrée sur l'axe 32 et s'étendant entre deux bords extrêmes 40 et 42.

Le volet 30 est propre à pivoter de l'une à l'autre de deux positions extrêmes, comprenant une position dite "position chaud" dans laquelle la sortie 24 du conduit d'air froid 12 est fermée (volet représenté en trait plein) et une position dite "position froid" dans laquelle la sortie 24 du conduit d'air froid est ouverte (volet représenté en trait interrompu). Dans cette dernière position, le volet est relevé vers le haut et escamoté derrière une paroi 36 du boîtier 10. Le fonctionnement du volet 30 est coordonné avec le robinet 20 de sorte que, lorsque le volet est en position "chaud", le robinet 20 est ouvert et que, lorsque le volet est en position "froid", le robinet 20 est fermé. Pour cela, le dispositif comprend des moyens de commande 38, représentés de façon schématique, reliés d'une part à un mécanisme d'actionnement du volet 30 et, d'autre part, à un mécanisme d'actionnement du robinet 20.

Lorsque le volet est dans la position "chaud", sa paroi d'obturation ferme complètement la sortie 24 du conduit 12 et s'étend alors entre la cloison 22 et la paroi 36, si bien que le flux d'air est obligé de balayer le radiateur 18, lequel est chaud, du fait que le robinet 20 est ouvert.

Lorsque le volet est en position "froid" la sortie 24 du conduit 12 est ouverte, de même que la sortie 26 du conduit 14. L'air est ainsi divisé en deux flux qui se rejoignent dans la chambre de mixage. Mais, comme le robinet 20 est fermé, cette chambre est alimentée uniquement par de l'air froid.

Lorsque le volet est déplacé de la position "chaud" vers la position "froid", il pivote dans le sens horaire (sur les figures 1 et 2). Au début de ce mouvement de rotation, le bord 40 qui, au départ, était en contact étanche avec la cloison 22, s'écarte de cette dernière ce qui permet de dégager une région de la sortie du conduit d'air froid qui est proche de la cloison 22 et donc de la sortie du conduit d'air chaud. Il en résulte (figure 2) qu'un flux d'air froid F1 peut pénétrer dans la chambre de mixage 28 dans une région proche du flux d'air réchauffé F2 qui pénètre dans la chambre de mixage 28 par la sortie 26. Ceci permet de mélanger ces deux flux d'air dans une zone de mixage 44 (figure 2) qui se situe immédiatement au-dessus du radiateur 18 et qui est immédiatement proche des sorties respectives 24 et 26 des conduits 12 et 14. Il en résulte un mélange des deux flux dans une région basse de la chambre de mixage 28, évitant tout risque de stratification des flux. Ceci permet de concevoir une chambre de mixage 28 qui possède un encombrement vertical réduit par rapport aux dispositifs antérieurs.

Bien entendu, le volet 30 peut occuper une multiplicité de positions intermédiaires, dites positions de mixage, entre les positions "froid" et "chaud", ce qui permet de régler la proportion des deux flux d'air et, par conséquent, la température de l'air dans la chambre de mixage 28. Cet air, à température ajustée, est ensuite distribué dans l'habitacle du véhicule par des buses appropriées.

On se réfère maintenant à la figure 3 qui représente un dispositif analogue à celui des figures 1 et 2, si ce n'est que le radiateur de chauffage 18 est ici en permanence traversé par un liquide chaud. Il est donc nécessaire, dans la position "froid", d'empêcher le passage d'un flux d'air au travers du radiateur 18. Pour cela, on prévoit un volet auxiliaire 46 logé dans le conduit d'air chaud 14 en amont du radiateur 18. Ce volet 46 est un volet papillon monté pivotant autour d'un axe 48 parallèle à l'axe 32 du volet 30, qui est identique à celui des figures 1 et 2. Les volets 30 et 46 sont commandés en coordination, en sorte que, dans la position "froid" et la position "chaud", le volet 46 est respectivement fermé et ouvert.

Le dispositif de la figure 4 est identique à celui de la figure 3, si ce n'est qu'il comporte en outre un volet auxiliaire 50 du type drapeau monté pivotant autour d'un axe 52 et propre à contrôler la sortie 26 du conduit d'air chaud 14. Il est à remarquer que l'on peut fermer le conduit d'air chaud 14 en recourant à l'un et ou l'autre des volets 48 et 50. Dans tous les cas, lorsque le volet principal 30 est en position "froid" l'un et/ou l'autre des volets auxiliaires 46 et 50 empêchent l'arrivée d'un flux d'air chaud dans la chambre de mixage 28.

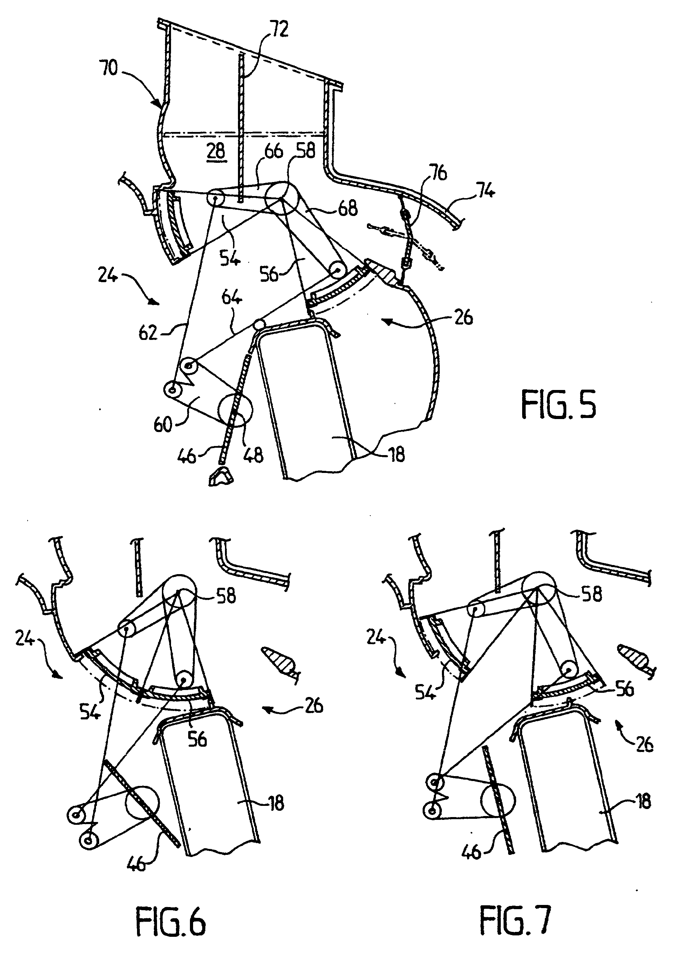

On se réfère maintenant aux figures 5 à 7 qui montrent une autre forme de réalisation du dispositif de l'invention. Les moyens de mixage comprennent ici un volet principal 54 du type tambour et un volet auxiliaire 56, également du type tambour, qui peuvent pivoter en rotation autour d'un axe commun 58, c'est-à-dire de manière coaxiale. Ces deux volets sont propres à tourner avec des sens de rotation opposés entre la position "froid" dans laquelle les volets sont éloignés (figure 5) et la position "chaud" où les deux volets sont rapprochés (figure 6). Dans la position "froid", le volet principal 54 ouvre la sortie 24 du conduit d'air froid, alors que le volet auxiliaire 56 ferme la sortie 26 du conduit d'air chaud. Dans la position "chaud" les deux volets 54 et 56 ferment conjointement la sortie 24 du conduit d'air froid et dégagent la sortie 26 du conduit d'air chaud. Le pivotement coordonné des deux volets s'effectue grâce à un palonnier 60 auquel sont articulées deux tringles de liaison 62, 64. Ces dernières sont articulées respectivement à deux leviers 66 et 68 qui sont respectivement solidaires en rotation des volets 54 et 56.

De même que dans les formes de réalisation précédentes, lorsque le volet principal 54 s'éloigne de la position "chaud" (figure 6) vers la position "froid" (figure 5), il pivote dans le sens horaire et dégage une région de la sortie 24 du conduit d'air froid qui est adjacente à la sortie 26 du conduit d'air chaud, ce qui favorise le mélange des deux flux d'air (figure 7).

Le dispositif comprend en outre un volet auxiliaire 46 du type papillon analogue à celui des figures 3 et 4 et monté en rotation autour d'un axe 48 qui est commun avec l'axe de rotation du palonnier 60.

Sur la figure 5, on a représenté un conduit de sortie 70 communiquant avec la chambre de mixage 28 et contrôlé par un volet 72 pour alimenter des buses de dégivrage et d'aération du véhicule, ainsi qu'un autre conduit de sortie 74, appelé "conduit pieds", contrôlé par un volet 76.

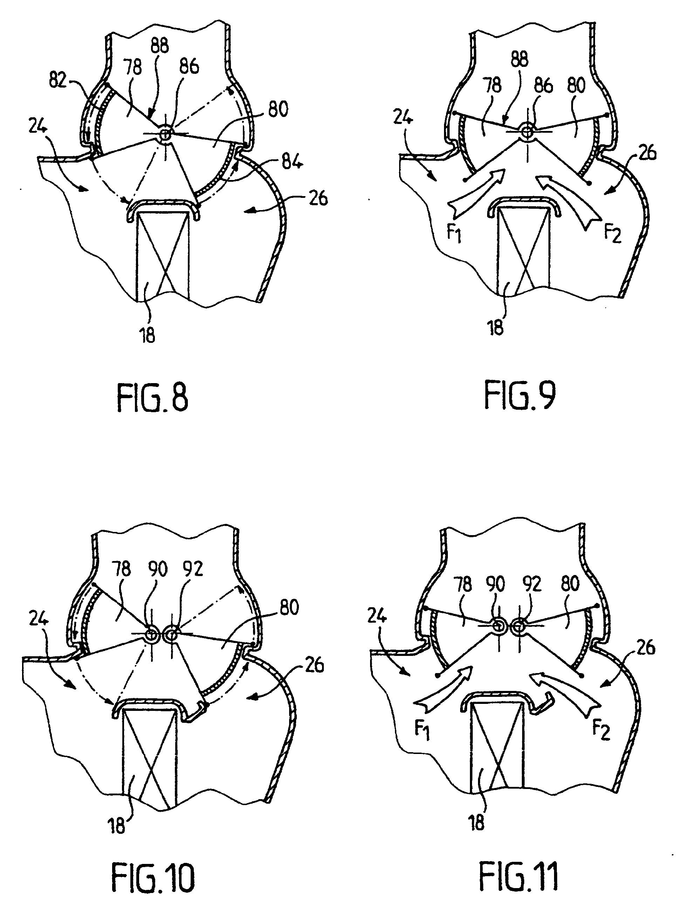

Le dispositif des figures 8 et 9 comprend un volet principal 78 du type tambour et un volet auxiliaire 80 du type tambour et possédant des parois d'obturation respectives 82 et 84. Ces deux volets 78 et 80 sont montés pivotants autour d'un axe commun 86 pour constituer un ensemble monobloc 88. Ils tournent ainsi dans le même sens de rotation entre la position "froid" où le volet principal 78 ouvre la sortie 24 du conduit d'air froid et le volet auxiliaire 80 ferme la sortie 26 du conduit d'air chaud (volets représentés en trait plein) et la position "chaud" où le volet principal 78 ferme la sortie du conduit d'air froid et le volet auxiliaire 80 ouvre la sortie du conduit d'air chaud (volets représentés en trait interrompu).

Comme dans les formes de réalisation précédentes, lorsque le volet 78 est déplacé de la position "chaud" vers la position "froid", il commence à dégager une région de la sortie 24 du conduit d'air froid qui est proche de la sortie d'air 26 du conduit d'air chaud favorisant le mélange des flux d'air F1 et F2 (figure 9).

Le dispositif des figures 10 et 11 constitue une variante de celui des figures 8 et 9. Les volets 78 et 80, toujours du type tambour, au lieu de former un ensemble monobloc, sont distincts et montés à rotation autour d'axes parallèles adjacents, respectivement 90 et 92. Les volets 78 et 80 sont propres à pivoter tous deux dans le même sens de rotation. Le fonctionnement du dispositif des figures 10 et 11 est analogue à celui des figures 8 et 9.

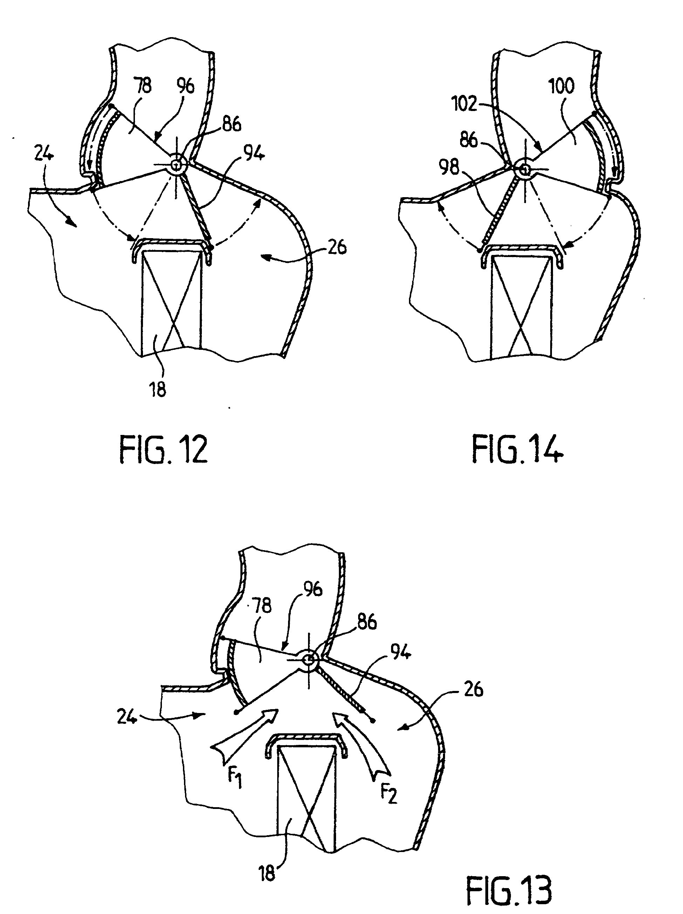

Le dispositif des figures 12 et 13 s'apparente à celui des figures 8 et 9 et comprend un volet principal 78 du type tambour analogue à celui décrit précédemment, et un volet auxiliaire 94 du type drapeau. Ces deux volets forment un ensemble monobloc 96 monté à rotation autour d'un axe commun 86. Le fonctionnement du dispositif des figures 12 et 13 est analogue à celui des figures 8 et 9.

Le dispositif de la figure 14 s'apparente à celui de la figure 12, si ce n'est que l'on a inversé la nature des deux volets. Le dispositif comprend ici un volet principal 98 du type drapeau et un volet auxiliaire 100 du type tambour qui forment un ensemble monobloc 102 monté à rotation autour d'un axe commun 86.

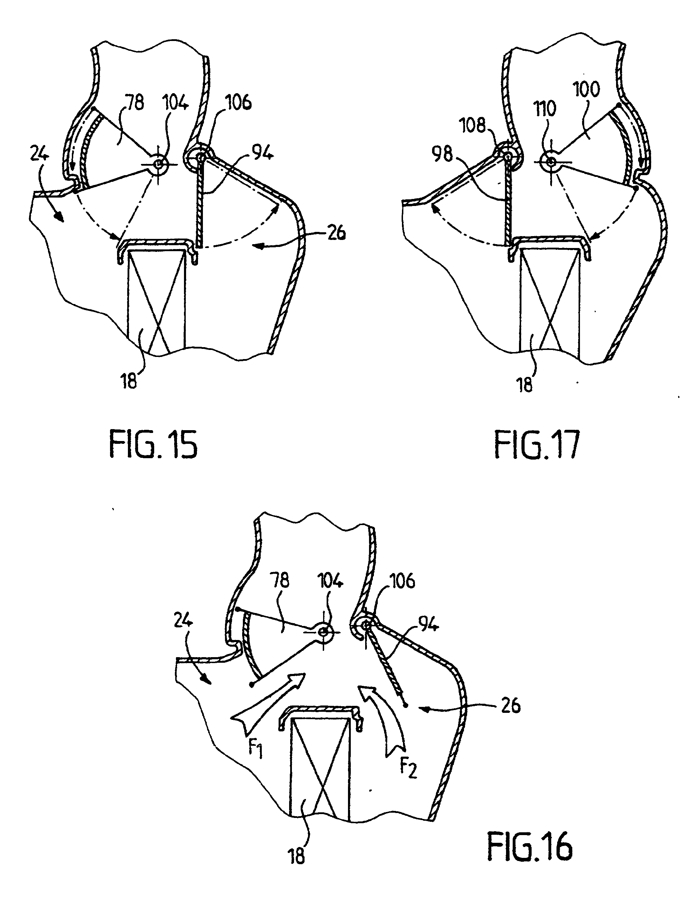

Le dispositif des figures 15 et 16 constitue une variante des figures 12 et 13 en ce sens que les volets 78 et 94, au lieu de former un ensemble monobloc, sont distincts et sont montés à rotation, dans le même sens, autour d'axes respectifs parallèles 104 et 106.

Le dispositif de la figure 17 constitue une variante de celui de la figure 14 en ce sens que les volets 98 et 100, au lieu de constituer un ensemble monobloc, sont distincts et montés à rotation autour d'axes respectifs 108 et 110 parallèles.

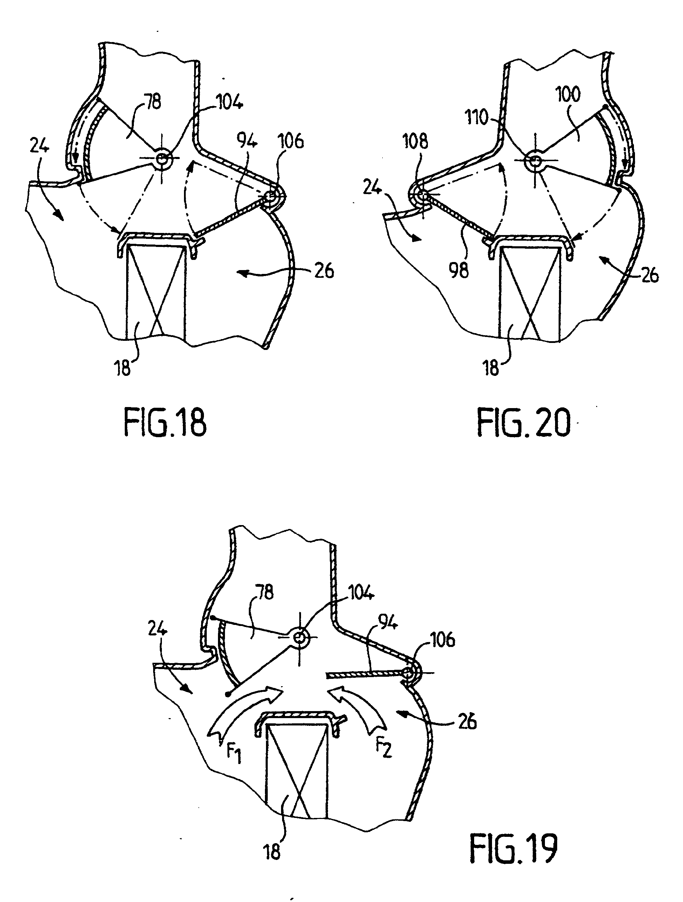

Le dispositif des figures 18 et 19 s'apparente à celui des figures 15 et 16 et comprend un volet principal 78 de type tambour et un volet auxiliaire 94 de type drapeau, montés à rotation autour d'axe parallèles 104 et 106. Par rapport à la forme de réalisation des figures 15 et 16, cette forme de réalisation diffère par le fait que les volets ont des sens de rotation opposés et que leurs axes de rotation sont plus éloignés.

Le dispositif de la figure 20 propose une configuration inversée par rapport à celui des figures 18 et 19 et constitue en même temps une variante de celui de la figure 17. Le volet principal 98 est du type drapeau et le volet auxiliaire 100 du type tambour, mais les axes de rotation respectifs 108 et 110 sont éloignés et les volets pivotent en sens opposés.

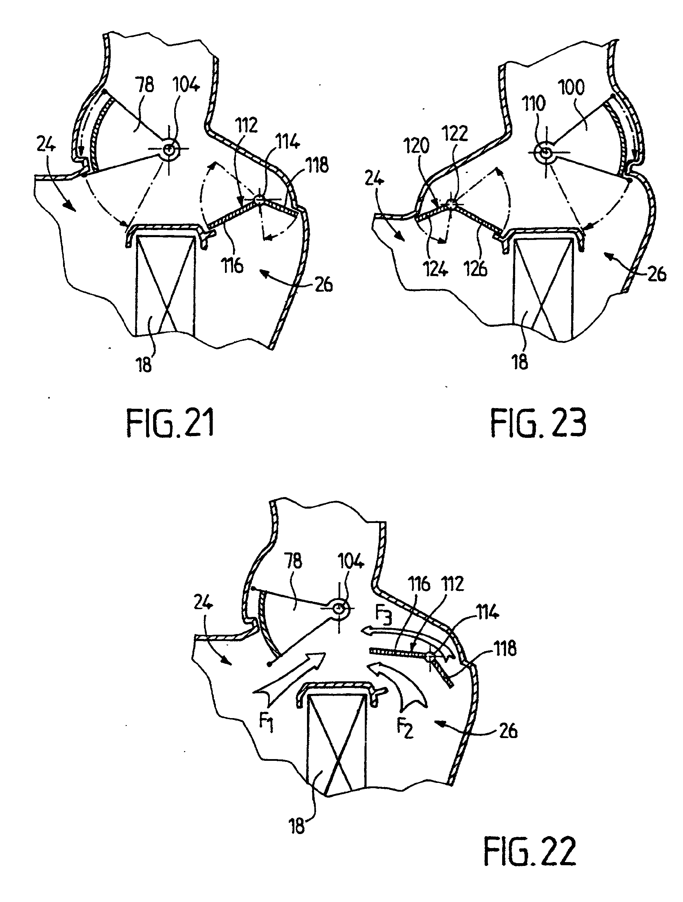

Le dispositif des figures 21 et 22 s'apparente à celui des figures 15 et 16. Il comprend un volet principal 78 de type tambour monté pivotant autour d'un axe 104. Le volet auxiliaire est ici un volet 112 de type papillon monté à rotation autour d'un axe 114 et possédant deux ailes 116 et 118 non coplanaires. Les deux volets sont montés à rotation en sens opposés autour de leurs axes respectifs 104 et 114. Du fait que les ailes 116 et 118 du volet 112 ne sont pas coplanaires, elles forment une paroi déflectrice qui, dans la position de mixage de la figure 22, permet de canaliser un flux d'air chaud F2 venant rencontrer le flux d'air froid F1 pour assurer le mixage et un autre flux d'air chaud F3 permettant une stratification. Le flux F3 est donc plus chaud que le flux résultant du mélange des flux F1 et F2.

Le dispositif de la figure 23 constitue une configuration inversée par rapport à la configuration précédente. Il comporte un volet principal 120 du type papillon monté à rotation autour d'un axe 122 et possédant deux ailes non coplanaires 124 et 126. Il comporte en outre un volet auxiliaire 100 du type tambour monté à pivotement autour d'un axe 110 et s'apparentant à celui de la figure 17. Ces deux volets sont montés à rotation dans des sens opposés.

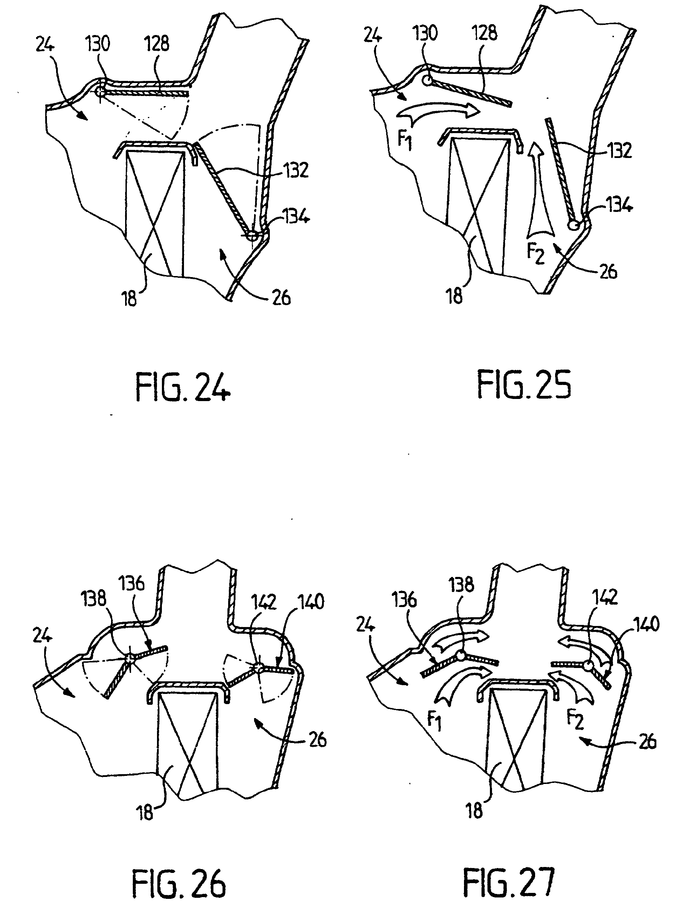

Le dispositif des figures 24 et 25 comprend un volet principal 128 du type drapeau monté pivotant autour d'un axe 130 et un volet auxiliaire 132, également du type drapeau, monté pivotant autour d'un axe 134. Ces deux axes sont montés à rotation dans le même sens autour d'axes respectifs parallèles.

Comme on peut le voir sur la figure 25, ces deux volets permettent, en position de mixage, de favoriser la rencontre des flux d'air froid F1 et d'air chaud F2 et par conséquent d'homogénéiser la température du flux d'air résultant.

Dans la forme de réalisation des figures 26 et 27, le dispositif comprend un volet principal 136 du type papillon monté pivotant autour d'un axe 138 et un volet auxiliaire 140 monté pivotant autour d'un axe 142. Ces deux volets sont montés à rotation dans le même sens autour de leurs axes respectifs 138 et 142, qui sont parallèles. Les volets 136 et 140 ont chacun des ailes non coplanaires formant déflecteurs, comme montré à la figure 27.

Dans tous les modes de réalisation décrits précédemment, le dispositif comprend des moyens de mixage qui permettent, lorsque l'on passe de la position "chaud" à la position "froid", de diriger un flux d'air froid en face d'un flux d'air chaud pour assurer leur mélange dans une région proche de l'échangeur de chaleur, ce qui permet de diminuer le volume de la chambre de mixage, et donc l'encombrement global du dispositif.

Bien entendu, l'invention n'est pas limitée aux formes de réalisation décrites précédemment et uniquement dans les figures 3-7, 12-13, 15, 18- 19, et 21-22 et ce à titre d'exemple mais s'étend à d'autres variantes de réalisation.

On comprendra que, dans le cadre de l'invention, lorsque plusieurs volets sont utilisés, il est possible d'utiliser des volets de même type ou de types différents.

## Revendications

1. Dispositif de chauffage et/ou climatisation de véhicule automobile, comprenant un conduit d'air froid (12), un conduit d'air chaud (14) logeant un radiateur de chauffage (18), une chambre de mixage (28) communiquant avec des sorties d'air respectives (24, 26) desdits conduits, et des moyens de mixage propres à contrôler lesdites sorties d'air en proportions choisies pour régler la température de l'air dans la chambre de mixage (28),
**caractérisé en ce que** les moyens de mixage comprennent au moins un volet tambour (30 ; 78) comportant une paroi d'obturation (34) agencée de telle sorte que, lorsqu'ils passent d'une position "chaud", en laquelle la sortie du conduit d'air froid (12) est fermée, à une position "froid", en laquelle la sortie du conduit d'air froid (12) est ouvert, la paroi d'obturation (34) dégage d'abord une région de la sortie (24) du conduit d'air froid (12) qui est proche de la sortie (26) du conduit d'air chaud (14) et un volet auxiliaire (46, 94, 132, 140) du type papillon ou drapeau coordonné avec le volet tambour (30; 78) propre à fermer le conduit d'air chaud (14) lorsque le volet tambour (30; 78) est en position "froid".

2. Dispositif selon la revendication 1, **caractérisé en ce que** les moyens de mixage comprennent un volet principal (30) monté pivotant autour d'un axe (32) et comportant une paroi (34) qui, dans la position "chaud", ferme la sortie (24) du conduit d'air froid (12) et, dans la position "froid", est escamotée dans une position éloignée du radiateur.

3. Dispositif selon la revendication 2, **caractérisé en ce que** le volet auxiliaire (46) est logé dans le conduit d'air chaud (14) en amont du radiateur de chauffage (18).

4. Dispositif selon la revendication 3, **caractérisé en ce que** le volet principal (30) est un volet tambour et le volet auxiliaire (46) est un volet papillon.

5. Dispositif selon la revendication 3, **caractérisé en ce que** le volet auxiliaire (50) est propre à contrôler la sortie (26) du conduit d'air chaud.

6. Dispositif selon la revendication 3, **caractérisé en ce que** le volet auxiliaire (56) est monté pivotant autour d'un axe éloigné de l'axe de rotation du volet principal (54).

7. Dispositif selon la revendication 6, **caractérisé en ce que** le volet principal (54) et le volet auxiliaire (56) ont des axes de rotation respectifs (58) qui sont coaxiaux ou sensiblement coaxiaux.

8. Dispositif selon la revendication 7, **caractérisé en ce que** le volet principal (54) et le volet auxiliaire (56) sont propres à tourner avec des sens de rotation opposés entre la position "froid" où les deux volets sont éloignés, le volet principal (54) ouvrant la sortie (24) du conduit d'air froid et le volet auxiliaire (56) fermant la sortie (26) du conduit d'air chaud, et la position "chaud" où les deux volets sont rapprochés et ferment conjointement la sortie (24) du conduit d'air froid (12).

9. Dispositif selon la revendication 7, **caractérisé en ce que** le volet principal (78) et le volet auxiliaire (80) sont propres à tourner dans le même sens de rotation entre la position "froid" où le volet principal (78) ouvre la sortie du conduit d'air froid et le volet auxiliaire (80) ferme la sortie du conduit d'air chaud et la position "chaud" où le volet principal (78) ferme la sortie du conduit d'air froid et le volet auxiliaire (80) ouvre la sortie du conduit d'air chaud.

10. Dispositif selon la revendication 9, **caractérisé en ce que** le volet principal (78) et le volet auxiliaire (80) forment un ensemble monobloc (82) et sont montés à rotation autour d'un axe unique (86).

11. Dispositif selon la revendication 9, **caractérisé en ce que** le volet principal (78) et le volet auxiliaire (80) sont distincts et sont montés à rotation autour d'axes parallèles adjacents (90, 92).

12. Dispositif selon la revendication 5, **caractérisé en ce que** le volet principal (78) est un volet tambour et le volet auxiliaire (94) est un volet drapeau.

13. Dispositif selon la revendication 12, **caractérisé en ce que** le volet principal (78) et le volet auxiliaire (94) forment un ensemble monobloc (96) monté à rotation autour d'un axe unique (86).

14. Dispositif selon la revendication 12, **caractérisé en ce que** le volet principal (78) et le volet auxiliaire (94) sont montés à rotation autour d'axes respectifs parallèles (104, 106).

15. Dispositif selon la revendication 5, **caractérisé en ce que** le volet principal (78) est un volet tambour et le volet auxiliaire (112) est un volet papillon.

16. Dispositif selon la revendication 15, **caractérisé en ce que** le volet auxiliaire (112) comporte deux ailes non coplanaires (116, 118).

17. Dispositif selon l'une des revendications 15 et 16, **caractérisé en ce que** le volet principal (78) et le volet auxiliaire (112) sont montés à rotation en sens opposés autour d'axes respectifs parallèles (104, 114).

## Claims

1. Heating and / or air conditioning device for an automobile vehicle, comprising a cold air duct (12), a warm air duct (14) housing a heating radiator (18), a mixing chamber (28) communicating with corresponding air outlets (24, 26) in said ducts, and mixing means capable of controlling said air outlets in proportions chosen to regulate the air temperature in the mixing chamber (28),
**characterised in that** the mixing means comprise at least one drum flap (30; 78) comprising a closing wall (34) arranged so that when they change from a "warm" position in which the cold air duct (12) is closed, to a "cold" position in which the cold air duct (12) is open, the closing wall (34) opens up first a region of the outlet (24) of the cold air duct (12) that is close to the outlet (26) of the warm air duct (14) and a butterfly or flag type auxiliary flap (46, 94, 132, 140) coordinated with the drum flap (30; 78) capable of closing the warm air duct (14) when the drum flap (30; 78) is in the "cold" position.

2. Device according to claim 1, **characterised in that** the mixing means comprise a main flap (30) mounted to pivot about an axis (32) and comprising a wall (34) closing the outlet (24) of the cold air duct (12) when it is in the "warm" position, and retracted in a position remote from the radiator when it is in the "cold" position.

3. Device according to claim 2, **characterised in that** the auxiliary flap (46) is located in the warm air duct (14) on the upstream side of the heating radiator (18).

4. Device according to claim 3, **characterised in that** the main flap (30) is a drum flap and the auxiliary flap (46) is a butterfly flap.

5. Device according to claim 3, **characterised in that** the auxiliary flap (50) is capable of controlling the warm air duct outlet (26).

6. Device according to claim 3, **characterised in that** the auxiliary flap (56) is mounted to pivot about an axis remote from the rotation axis of the main flap (54).

7. Device according to claim 6, **characterised in that** the main flap (54) and the auxiliary flap (56) have corresponding rotation axes (58) that are coaxial or substantially coaxial.

8. Device according to claim 7, **characterised in that** the main flap (54) and the auxiliary flap (56) are capable of rotating in opposite directions of rotation between the "cold" position in which the two flaps are remote from each other, the main flap (54) opening the outlet (24) of the cold air duct and the auxiliary flap (56) closing the outlet (26) of the warm air duct, and the "warm" position in which the two flaps are close to each other and jointly close off the outlet (24) of the cold air duct (12).

9. Device according to claim 7, **characterised in that** the main flap (78) and the auxiliary flap (80) are capable of rotating in the same direction of rotation between the "cold" position in which the main flap (78) opens the outlet of the cold air duct and the auxiliary flap (80) closes the outlet of the warm air duct, and the "warm" position in which the main flap (78) closes the outlet of the cold air duct and the auxiliary flap (80) opens the outlet of the warm air duct.

10. Device according to claim 9, **characterised in that** the main flap (78) and the auxiliary flap (80) form a single-piece assembly (82) and are mounted to rotate about a single axis (86).

11. Device according to claim 9, **characterised in that** the main flap (78) and the auxiliary flap (80) are separate and mounted to rotate about adjacent parallel axes (90, 92).

12. Device according to claim 9, **characterised in that** the main flap (78) is a drum flap and the auxiliary flap (94) is a flag valve.

13. Device according to claim 12, **characterised in that** the main flap (78) and the auxiliary flap (94) form a single-piece assembly (96) mounted to rotate about a single axis (86) .

14. Device according to claim 12, **characterised in that** the main flap (78) and the auxiliary flap (94) are mounted to rotate about corresponding parallel axes (104, 106).

15. Device according to claim 5, **characterised in that** the main flap (78) is a drum flap and the auxiliary flap (112) is a butterfly flap.

16. Device according to claim 15, **characterised in that** the auxiliary flap (112) comprises two non-coplanar blades (116, 118).

17. Device according to either of claims 15 or 16, **characterised in that** the main flap (78) and the auxiliary flap (112) are mounted to rotate in opposite directions about corresponding parallel axes (104, 114).

## Patentansprüche

1. Heiz- und/oder Klimatisierungsvorrichtung für Kraftfahrzeuge, die eine Kaltluftleitung (12), eine Heißluftleitung (14) umfasst, die einen Heizkörper (18), eine Mischkammer (28), die mit jeweiligen Luftausgängen (24, 26) der besagten Leitungen kommuniziert, aufnimmt, sowie Mischmittel, die geeignet sind für das Kontrollieren der besagten Luftausgänge in Proportionen, die gewählt sind, um die Temperatur der Luft in der Mischkammer (28) zu regulieren, **dadurch gekennzeichnet, dass** die Mischmittel zumindest eine Trommelklappe (30; 78) mit einer Verschlusswand (34) umfassen, die derart angeordnet ist, dass, wenn sie von einer "Warm" Position, in der der Ausgang der Kaltluftleitung (12) geschlossen ist, zu einer "Kalt" Position, in der der Ausgang der Kaltluftleitung (12) offen ist, übergehen, die Verschlusskappe (34) zuerst einen Bereich des Ausgangs (24) von der Kaltluftleitung (12) in der Nähe des Ausgangs (26) von der Heißluftleitung (14) frei macht und eine Hilfsklappe (46, 94, 132, 140) des Drossel- oder Flaggentyps koordiniert mit der Trommelklappe (30; 78), die zum Schließen der Heißluftleitung (14) geeignet ist, wenn die Trommelklappe (30; 78) in der "Kalt" Position ist.

2. Vorrichtung nach Anspruch 1, **dadurch gekennzeichnet, dass** die Mischmittel eine Hauptklappe (30) umfassen, die drehbar um eine Achse (32) montiert ist und die eine Wand (34) umfasst, die in der "Warm" Position den Ausgang (24) der Kaltluftleitung (12) schließt und die in der "Kalt" Position in einer vom Heizkörper weit entfernten Position eingezogen ist.

3. Vorrichtung nach Anspruch 2, **dadurch gekennzeichnet, dass** die Hilfsklappe (46) in der Heißluftleitung (14) vor dem Heizkörper (18) aufgenommen ist.

4. Vorrichtung nach Anspruch 3, **dadurch gekennzeichnet, dass** die Hauptklappe (30) eine Trommelklappe ist und dass die Hilfsklappe (46) eine Drosselklappe ist.

5. Vorrichtung nach Anspruch 3, **dadurch gekennzeichnet, dass** die Hilfsklappe (50) dazu geeignet ist, den Ausgang (26) der Heißluftleitung zu kontrollieren.

6. Vorrichtung nach Anspruch 3, **dadurch gekennzeichnet, dass** die Hilfsklappe (56) drehbar um eine Achse montiert ist, die weit von der Drehachse der Hauptklappe (54) entfernt ist.

7. Vorrichtung nach Anspruch 6, **dadurch gekennzeichnet, dass** die Hauptklappe (54) und die Hilfsklappe (56) jeweilige Drehachsen (58) aufweisen, die koaxial oder wesentlich koaxial sind.

8. Vorrichtung nach Anspruch 7, **dadurch gekennzeichnet, dass** die Hauptklappe (54) und die Hilfsklappe (56) dazu geeignet sind, sich in entgegengesetzten Drehrichtungen zwischen der "Kalt" Position, in der die beiden Klappen weit entfernt sind, wobei die Hauptklappe (54) den Ausgang (24) der Kaltluftleitung öffnet und die Hilfsklappe (56) den Ausgang (26) der Heißluftleitung schließt, und der "Warm" Position, in der die beiden Klappen dicht beieinander sind und gleichzeitig den Ausgang (24) der Kaltluftleitung (12) schließen, zu drehen.

9. Vorrichtung nach Anspruch 7, **dadurch gekennzeichnet, dass** die Hauptklappe (78) und die Hilfsklappe (80) dazu geeignet sind, sich in derselben Drehrichtung zwischen der "Kalt" Position, in der die Hauptklappe (78) den Ausgang der Kaltluftleitung öffnet und die Hilfsklappe (80) den Ausgang der Heißluftleitung schließt, und der "Warm" Position, in der die Hauptklappe (78) den Ausgang der Kaltluftleitung schließt und die Hilfsklappe (80) den Ausgang der Heißluftleitung öffnet, zu drehen.

10. Vorrichtung nach Anspruch 9, **dadurch gekennzeichnet, dass** die Hauptklappe (78) und die Hilfsklappe (80) eine Monoblockeinheit (82) bilden und dass sie in Drehung um eine einzige Achse (86) montiert sind.

11. Vorrichtung nach Anspruch 9, **dadurch gekennzeichnet, dass** die Hauptklappe (78) und die Hilfsklappe (80) verschieden sind und dass sie in Drehung um angrenzende parallele Achsen (90, 92) montiert sind.

12. Vorrichtung nach Anspruch 9, **dadurch gekennzeichnet, dass** die Hauptklappe (78) eine Trommelklappe und die Hilfsklappe (94) eine Flaggenklappe ist.

13. Vorrichtung nach Anspruch 12, **dadurch gekennzeichnet, dass** die Hauptklappe (78) und die Hilfsklappe (94) eine Monoblockeinheit (96) bilden, die in Drehung um eine einzige Achse (86) montiert ist.

14. Vorrichtung nach Anspruch 12, **dadurch gekennzeichnet, dass** die Hauptklappe (78) und die Hilfsklappe (94) in Drehung um jeweilige parallele Achsen (104, 106) montiert sind.

15. Vorrichtung nach Anspruch 5, **dadurch gekennzeichnet, dass** die Hauptklappe (78) eine Trommelklappe und die Hilfsklappe (112) eine Drosselklappe ist.

16. Vorrichtung nach Anspruch 15, **dadurch gekennzeichnet, dass** die Hilfsklappe (112) zwei Flügel (116, 118) umfasst, die nicht koplanar sind.

17. Vorrichtung nach einem der Ansprüche 15 und 16, **dadurch gekennzeichnet, dass** die Hauptklappe (78) und die Hilfsklappe (112) in Drehung in entgegengesetzten Richtungen um jeweilige parallele Achsen (104, 114) montiert sind.
